(19) Europäisches Patentamt
European Patent Office
Office européen des brevets

(11) Veröffentlichungsnummer: **0 230 031 B1**

(12) # EUROPÄISCHE PATENTSCHRIFT

(45) Veröffentlichungstag der Patentschrift: **17.10.90**

(51) Int. Cl.[5]: **C09D 5/44**

(21) Anmeldenummer: **86117826.7**

(22) Anmeldetag: **20.12.86**

(54) **Kathodisch abscheidbares wässriges Elektrotauchlack-Überzugsmittel und dessen Verwendung zum Beschichten von Gegenständen.**

(30) Priorität: **20.12.85 DE 3545205**

(43) Veröffentlichungstag der Anmeldung: **29.07.87 Patentblatt 87/31**

(45) Bekanntmachung des Hinweises auf die Patenterteilung: **17.10.90 Patentblatt 90/42**

(84) Benannte Vertragsstaaten: **AT BE DE ES FR GB IT NL SE**

(56) Entgegenhaltungen:
**EP-A- 0 131 125**
**EP-A- 0 178 531**
**US-A- 4 252 703**

(73) Patentinhaber: **Herberts Gesellschaft mit beschränkter Haftung, Christbusch 25, D-5600 Wuppertal 2(DE)**

(72) Erfinder: **Hönig, Helmut, Dr., Am Bredtchen 80, D-5600 Wuppertal 1(DE)**
Erfinder: **Patzschke, Hans-Peter, Dr., Am Heckendorn 71, D-5600 Wuppertal 2(DE)**

(74) Vertreter: **Türk, Gille, Hrabal, Brucknerstrasse 20, D-4000 Düsseldorf 13(DE)**

**EP 0 230 031 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein kathodisch abscheidbares wäßriges Elektrotauchlack-Überzugsmittel enthaltend durch Protonisieren mit Säuren wasserverdünnbare Bindemittel, Pigmente, Füllstoffe, Korrosionsschutzinhibitoren, Lackhilfsmittel, gegebenenfalls Katalysatoren und in einer Menge von bis zu 15 Gew.-%, bezogen auf das Gesamtgewicht des Überzugsmittels, organische Lösemittel, sowie mit den Bindemitteln beim Einbrennen über 110°C unter Vernetzung reagierende Verbindungen. Die Erfindung betrifft auch die Verwendung eines solchen Überzugsmittels zum Beschichten von Gegenständen mit elektrisch leitender Oberfläche. Diese Gegenstände werden in das Bad des Elektrotauchlack-Überzugsmittels getaucht, und nach Durchleiten eines elektrischen Stromes scheidet sich das Überzugsmittel auf dem als Kathode geschalteten zu beschichtenden Gegenstand ab.

Derartige Elektrotauchlack-Überzugsmittel werden großtechnisch eingesetzt und als Elektrophorese-Lacke oder EC-Lacke bezeichnet. Als E-C-Lacke mit hohem Umgriff und gutem Korrosionsschutz auf Blechen werden dabei an der Kathode abscheidbare Bindemittel bevorzugt. Sie werden besonders aus Epoxidharzen und Aminen bzw. Aminoalkoholen hergestellt. Mit bindemitteln dieser Art werden üblicherweise Schichtdicken von nur 17 bis 20 µm erhalten. Es besteht daher die Aufgabenstellung, ein Verfahren zu finden, mit dem dickere Schichten hergestellt werden können.

In der DE-C-31 08 072 werden kationische Filmbildner eingesetzt, die durch einen zusätzlichen Gehalt an quaternären Ammoniumsalzen gekennzeichnet sind. Mit solchen salzartigen Zusätzen werden zwar dickere Schichten erhalten; sie setzen aber gleichzeitig die Durchbruchsspannung herab, d.h. durch elektrische Durchschläge wird die Filmschicht aufgerissen und es bildet sich keine glatte Schicht aus.

In den DE-A-31 52 220 und DE-A-31 08 073 ( S. 3, Zeilen 8 bis 13) wird festgestellt, daß bei der Elektrotauchlackierung größere Schichtdicken erzielt werden können, wenn Bindemittel auf Basis von modifizierten Epoxidharzen verwendet werden, die aromatische und aliphatische bzw. alicyclische Gruppen in bestimmten Verhältnissen enthalten. Beim Einbau von aliphatischen Epoxidharzen ist jedoch immer wieder zu beobachten, daß der Korrosionsschutz verschlechtert wird.

In der EP-A-O 102 196 ( S. 2, Zeilen 8 bis 14) wird beschrieben, daß die Schichtdicke durch Zusatz von Lösemitteln oder Weichmachern erhöht werden kann. Besonders wirksam sind wasserunlösliche, hochsiedende Lösemittel. Diese Arbeitsweise hat jedoch den Nachteil, daß mit dem Lack ein niedrigerer Umgriff erzielt wird, d.h. eine schlechtere Beschichtung von Hahlräumen erfolgt und daß sich die Abgabe von organischen Verbindungen an die Umwelt erhöht.

Es wurde nun überraschenderweise gefunden, daß durch Verwendung von kleinen Mengen spezieller nicht wasserlöslicher, aliphatischer, reaktiver Verdünner die Schichtdicke erhöht wird, ohne daß der Korrosionsschutz und die Durchbruchsspannung verringert wird. Diese Lacke ergeben dickere Schichten und/oder enthalten weniger organische Lösemittel, insbesondere wasserunlösliche, hochsiedende Lösemittel. Überraschenderweise werden mit Hilfe dieser Kombination spezielle Eigenschaftseffekte erzielt, die aus den Einzelkomponenten nicht erwartet werden konnten.

Gegenstand der Erfindung sind demgemäß kathodisch abscheidbare wäßrige Elektrotauchlack-Überzugsmittel der eingangs genannten Art, die dadurch gekennzeichnet sind, daß die mit dem Bindemittel reagierenden Verbindungen eine Mischung sind aus

A) 90 bis 10 Masseteilen, bezogen auf die Gesamtmasse von A und B, Verbindungen oder Gemischen davon, die eine oder zwei blockierte Isocyanatgruppen und/oder umesterungs- oder umamidierungsfähige Gruppen als funktionelle Gruppen enthalten, die bei Einbrenntemperaturen über 110°C mit dem wasserverdünnbaren Bindemittel reagieren, und ein mittleres Molekulargewicht ($\overline{Mn}$) von weniger als 1500 haben, wobei diese Verbindungen, wenn sie als funktionelle Gruppen nur blockierte Isocyanatgruppen enthalten, ein mittleres Molekulargewicht ($\overline{Mn}$) von weniger als 750 haben, und

B) 10 bis 90 Masseteilen, bezogen auf die Gesamtmasse von A und B, Verbindungen oder Gemischen davon, die pro Molekül mindestens drei blockierte Isocyanatgruppen und/oder umesterungs- oder umamidierungsfähige Gruppen als funktionelle Gruppe enthalten, die bei Einbrenntemperaturen über 110°C mit dem wasserverdünnbaren Bindemittel reagieren, und ein mittleres Molekulargewicht ($\overline{Mn}$) von 750 bis 10 000 haben, wobei diese Verbindungen, wenn sie als funktionelle Gruppen umesterungs- oder umamidierungsfähige Gruppen enthalten, ein mittleres Molekulargewicht ($\overline{Mn}$) von mindestens 1500 haben,

und daß der Gehalt an organischen wasserunlöslichen, hochsiedenden Lösemitteln, bezogen auf die Gesamtmasse des Überzugsmittels, unter 5 Masse-% liegt.

Es ist bevorzugt, daß die Komponente A) aliphatische Verbindungen sind, die ein Masse-Verhältnis der aliphatischen Kohlenstoff-Gruppen zu polaren Gruppen von 1:1 bis 8:1 haben.

Dabei ist weiterhin bevorzugt, daß die Komponente A) geradkettige oder verzweigte aliphatische Verbindungen sind.

Die Verbindungen der Komponente A) enthalten als funktionelle Gruppe umesterungsfähige Estergruppen und/oder blockierte Isocyanatgruppen, da Verbindungen mit diesen Gruppen leicht zugänglich sind und auch gemäß dem Stand der Technik Verbindungen mit solchen Gruppen bereits eingesetzt wurden, um Vernetzungen mit den durch Protonisieren mit Säuren wasserverdünnbaren Bindemitteln zu erzielen.

Bevorzugt ist, daß die Komponente A) als funktionelle Gruppen nur umesterungs- oder umamidierungsfähige Gruppen enthält, bei 25°C flüssig ist und eine Glasübergangstemperatur Tg von weniger als 20°C hat.

Es ist bevorzugt, daß die Komponente B) aus aliphatischen und gegebenenfalls zusätzlich aromatischen Verbindungen hergestellt sind, wobei das Masse-Verhältnis von aliphatischen zu aromatischen Gruppen im Bereich von 1:1 bis 1:0 beträgt. Bevorzugt sind nur aliphatische Verbindungen. Auch ist bevorzugt, daß die Komponente B) bei 25°C fest oder harzartig ist.

Es ist möglich, daß die Komponente A) und/oder B) sowie das durch Protonisieren mit Säuren wasserverdünnbare Bindemittel miteinander reaktionsfähige olefinische Doppelbindungen enthalten. Diese olefinischen Gruppen können bewirken, daß eine zusätzliche stabile Vernetzung über Polymerisationsreaktionen zwischen diesen Gruppen erzielt wird.

Die Menge der Verbindungen A) und B), bezogen auf die Menge des durch Protonisieren mit Säuren wasserverdünnbaren Bindemittels, des sogenannten Grundharzes, wie es auch gemäß dem Stand der Technik bezeichnet wird, liegt innerhalb des dem Fachmann auf diesem technischen Gebiet bekannten Bereiches zwischen Vernetzungsmittel und Grundharz. Bevorzugt ist es, daß auf 100 Masseteile des durch Protonisieren mit Säuren wasserverdünnbaren Bindemittels 10 bis 80 Masseteile der Komponenten A) und B) entfallen.

Reaktivverdünner A und Vernetzungsmittel B reagieren im wesentlichen mit den OH- oder $NH_2$-Gruppen des basischen Grundharzes. Enthalten die Reaktivverdünner zusätzlich ungesättigte Doppebindungen, so können diese ebenfalls reagieren, wenn das Grundharz Doppelbindungen enthält. So entsteht zwischen diesen Gruppen zusätzlich eine besonders stabile Vernetzung über Polymerisationsreaktionen.

Die Verbindungen der Komponanten A) und B) enthalten zweckmäßig keine freien Carboxylgruppen, keine Epoxidgruppen und keine freien Isocyanatgruppen. Letztere würden sofort mit dem im Lack vorhandenen Wasser reagieren. Vorliegende freie Carboxylgruppen können die ablaufenden Reaktionen beim Einbrennen hemmen oder bei größerer Anzahl eine Wanderung zur Anode bewirken. Freie Epoxidgruppen sind nicht zweckmäßig, weil diese eine unerwünschte vorzeitige Reaktion mit dem Wasser bzw. mit dem Grundharz eingehen können.

Die Verbindungen der Komponenten A) und B) sind in der Regel nicht wasserlöslich, lassen sich aber leicht mit Hilfe des durch Protonisieren wasserverdünnbar gemachten Basisharzes in Wasser einemulgieren. Diese Emulgierbarkeit wird verbessert, wenn sie Hydroxylgruppen enthalten, zweckmäßig mindestens eine Hydroxylgruppe, bevorzugt mindestens zwei Hydroxylgruppen pro Molekül. Die genannten Komponenten können gegebenenfalls eine geringe Aminzahl, zweckmäßig unter 30 mg KOH pro g aufweisen, was aber im allgemeinen nicht notwendig ist.

Als reaktive Stellen der Komponenten A) und B) werden Harze mit umesterungsfähigen Estergruppen bevorzugt, die im neutralen, wäßrigen Medium weitgehend stabil sind, jedoch im basischen Medium des abgeschiedenen Films in Gegenwart von geeigneten Umesterungskatalysatoren bei Temperaturen über 120°C, bevorzugt über 140°C mit einem oder mehreren hydroxyl- und/oder aminogruppenhaltigen Kunstharz-Bindemitteln, das zusätzlich ungesättigte Doppelbindungen enthalten kann, reagieren. Hierbei estern bzw. amidieren die umesterungsfähigen Estergruppen mit den Hydroxylgruppen oder den reaktiven Amino-Gruppen des Basisharzes unter Abspalten der leichter flüchtigen "alkoholischen Schutzgruppen" um. Es sollen im wesentlichen alle endständigen und/oder seitenständigen Carboxylgruppen mit gegebenenfalls substituierten Akoholen verestert sein, die unter den Einbrennbedingungen aus dünner Schicht flüchtig sind. Die Reaktivität der Ester wird durch geeigneten chemischen Aufbau gesteigert, z.B. durch Erhöhen der elektrophilen Aktivität der Carboxylgruppe oder durch einen negativen induktiven Effekt auf die Alkoholgruppe. Um ein Wandern des Polyesters zur Anode und eine Schwächung der Reaktivität zu vermeiden, ist darauf zu achten, daß er eine Säurezahl unter 20, bevorzugt unter 10, besonders bevorzugt unter 3 hat.

Enthalten die Komponenten A) und B) blockierte Isocyanatgruppen , so ist hierbei diese stöchiometrisch mit einer monofunktionellen, aktiven Wasserstoff (Zerewitinoff-Reaktion) enthaltenden Verbindung umgesetzt, die die Isocyanatgruppe bei Raumtemperatur gegen Reaktionen mit Wasser oder Alkoholen schützt. Sie spaltet sich bei Einbrenntemperaturen von weniger als 210°C, vorzugsweise weniger als 190°C, besonders unter 180°C, andererseits über 110°C, vorzugsweise über 140°C, besonders bevorzugt über 150°C, wieder ab, damit die freiwerdende Isocyanatgruppe mit dem Basisharz reagieren kann. Mittel, die die Isocyanate blockieren, enthalten nur eine einzige Amin-, Amid-, Lactam-, Thiol- oder Hydroxylgruppe. So haben sich beispielsweise bewährt aliphatische oder cycloaliphatische Alkohole wie 2-Ethylhexanol, Dialkylaminoalkohol wie Dimethylaminoethanol, Phenole wie Kresol, Oxime wie Methylethylketoxim, Lactame wie ε-Caprolactam, Imide wie Phthalimid, Hydroxyalkylester, Malonsäure- oder Acetessigsäureester. Es werden aber auch β-Hydroxyglykole oder -glykolether und Glykolamide empfohlen.

Das Bindemittelsystem enthält, wie die bekannten EC-Lacke, als wasserverdünnbare Grundharze oder Basisharze aminogruppenhaltige selbst- und/oder fremdvernetzende Basisharze.

Als an der Kathode abscheidbare Basisharze kommen grundsätzlich alle auf diesem technischen Gebiet bekannten Bindemittelsysteme infrage, die entweder tertiäre Aminogruppen und Hydroxylgruppen oder neben sekundären und/oder primären Aminogruppen gegebenenfalls noch zusätzlich Hydroxyl-

gruppen und/oder quaternäre Ammoniumgruppen enthalten. Das Kunstharz-Bindemittel oder Bindemittel-Mischungen enthalten mindestens eine Aminogruppe pro Molekül. Die untere Grenze der Aminzahl sollte bei 30, bevorzugt 45, besonders bevorzugt 70, die obere Grenze dagegen sollte bei 150, bevorzugt 120, besonders bevorzugt 100 liegen. Es können die auf diesem technischen Gebiet bekannten basischen Harzsysteme wie Amino-Epoxidharze, Amino-Poly(meth)acrylatharze, aminogruppenhaltige Polybutadienöle und/oder Amino-Polyurethanharze mit einer Hydroxylzahl von 50 bis 500 ( mg KOH/g Festharz) und einer mittleren Molmasse ($\overline{Mn}$) von 250 bis 10 000 verwendet werden. Der Einsatz von Amino-Epoxidharzen wird für Grundierungen mit hohem Korrosionsschutz bevorzugt. Die Verwendung von Amino-Poly(meth)acrylaten wird bevorzugt für helle, nicht vergilbende Einschichtlacke. Die Vernetzung dieser Produkte erfolgt gemäß der Erfindung durch Umesterung oder Umamidierung und/oder mit Hilfe von blockierten Isocyanaten, gegebenenfalls zusätzlich über Doppelbindungen. Solche Bindemittelsysteme werden beispielsweise beschrieben in DE-A-20 57 799, EP-A-O 004 090, EP-A-O 006 859, DE-A-27 32 902, EP-A-O 012 463, DE-A-33 33 834, DE-A-34 36 345, DE-A-34 36 346, DE-A-33 36 749, DE-A-33 15 469.

Die Basisharze können gesättigt oder ungesättigt sein, wie beispielsweise in DE-A- 27 07 405 oder DE-A-27 07 482 beschrieben.

Als reaktive Verdünner (Komponente A) sind lösemittelfreie Verbindungen geeignet, die maximal zwei umesterungsfähige Estergruppen enthalten und bei Raumtemperatur flüssig sind. Sie sollen so niedrig viskos sein, daß sie in gewisser Weise wie ein Lösemittel wirken, andererseits aber über die reaktiven Gruppen in den Film beim Einbrennen eingebaut werden. Ihre Viskosität liegt unverdünnt zweckmäßig unter 3 Pa•s, besonders bevorzugt unter 2.0 Pa•s, besonders bevorzugt unter 1 Pa•s bei 25°C. Bei umesterungsfähigen Verdünnern liegen die Molekulargewichte unter 1500, zweckmäßig unter 1000. Die niedrigmolekularen blockierten Diisocyanate sind aufgrund ihrer Wasserstoffbrücken im unverdünnten Zustand hochviskos bis fest. Verwendet man sie jedoch in niedrigen Konzentrationen als Zusatzmittel, so wirken sie im verdünnten Lack in gleicher Weise wie die umesterungsfähigen Reaktivverdünner. Bei diesen blockierten Diisocyanaten liegen die Molekulargewichte unter 750, bevorzugt unter 600. Die Verwendung von umesterungsfähigen Verdünnern wird bevorzugt.

Scheidet man ein EC-Bindemittel bei verschiedenen Badtemperaturen mit konstanter Spannung ab, so werden im eingebrannten Film unterschiedliche Schichtdicken und Filmqualitäten erzielt. Hierbei bildet sich ein Schichtdickenminimum aus, bei dem die Filmbildung am besten verläuft. Durch den Zusatz des reaktiven Verdünners wird diese Temperatur gesenkt. Diese überraschende Wirkung ist am stärksten, wenn das Verhältnis der aliphatischen zu den polaren Gruppen zwischen 1.0 und 8.0 liegt. Bevorzugt ist es 1.3 bis 5.0. Unter polaren Gruppen im Sinne der Erfindung werden funktionelle Gruppen wie Estergruppen, Amidgruppen, Urethangruppen oder die in den Molekülen enthaltenen Ether-Sauerstoff-Atome und Hydroxylgruppen verstanden. Unter den Begriff aliphatische Gruppen fallen alle in den Molekülen vorhandenen Kohlenstoff-Wasserstoff-Gruppen mit Ausnahme des Aromatenringes. Bevorzugt sind reaktive Verdünner, die rein aliphatisch aufgebaut sind, d.h. der Schmelzpunkt, bzw. die Glasübergangstemperatur liegt zweckmäßig unter 10°C, bevorzugt unter 0°C. Je weicher der Reaktivverdünner ist, desto größer ist sein Effekt im vorgenannten Sinne.

Die umesterungsfähigen Reaktivverdünner sind bevorzugt lineare oder verzweigte aliphatische Polycarbonsäurehydroxyalkyl ester folgender allgemeiner Struktur:

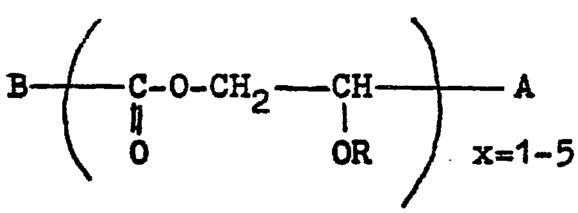

wobei R = -H, -R′
R′ = $-C_nH_{2n+1}$, $-C_nH_{2n-1}$, $-C_nH_{2n-3}$,
n = 1 bis 18
A = -R, $-CH_2$-OR, $-CH_2$-OOC-R′
B = der $C_{2-18}$-Alkylrest einer Mono- oder Dicarbonsäure ist.
Es werden bevorzugt Carbonsäuren mit gesättigten oder ungesättigten linearen, verzweigten oder cyclischen Alkylresten verwendet.

Die Herstellung geeigneter reaktiver Verdünner erfolgt durch Umsetzung von ein oder mehreren Dicarbonsäuren mit ein oder mehreren Monoepoxiden bei Reaktionstemperatur von 50 bis 150°C gegebenenfalls unter Zusatz von Katalysatoren wie wasserfreier Chrom-Komplex-Verbindungen, Triphenylphosphin und/oder tertiären Aminen. Als Dicarbonsäuren werden Dicarbonsäuren bevorzugt, die eine Kohlenstoffkette von 4 bis 10 haben und zweckmäßig kein intramolekulares Anhydrid bilden. Beispiele solcher Verbindungen sind Adipinsäure, Azelainsäure, Sebacinsäure oder auch 1.4-Cyclohexandicarbonsäure. Die "niedrigmolekularen Dicarbonsäuren" können auch aus Dicarbonsäure und Dialkohol hergestellt werden. Beispiele hierfür sind die Umsetzungsprodukte von überschüssiger Adipinsäure und

Neopentylglykol, Hydroxypivalinsäure -neopentylglykolester, Hexandiol-2.5, 1.4-Bis-(hydroxymethyl)-cyclohexan, 1.2-Isopropyliden-bis-(p-phenoxy)-2-propanol oder 2.2.4-Trimethylpentandiol-1-3. Zur Verbesserung der Emulgierbarkeit können gegebenenfalls auch Aminoalkohole verwendet werden, besonders solche mit tertiärem Stickstoff wie Monomethyldiethanolamin.

Andere niedrigmolekulare Vorprodukte können beispielsweise durch Reaktion von überschüssiger Dicarbonsäure mit Diisocyanaten wie Adipinsäure mit Hexandiisocyanat erhalten werden. Als Dicarbonsäuren können auch ungesättigte Dicarbonsäuren verwendet werden wie dimerisierte Fettsäure. Ist nur eine umesterungsfähige Estergruppe zur weiteren Umsetzung vorhanden, dann muß die Reaktivität des Verdünners durch ungesättigte Doppelbindungen verbessert werden. Das ist besonders dann vorteilhaft, wenn das Basisharz ebenfalls ungesättigte Doppelbindungen enthält. Verdünner dieser Art werden aus isoliert und konjugiert ungesättigten Monofettsäuren wie Sojaölfettsäure, Tallölfettsäure, Leinölfettsäure oder Ricinenfettsäure hergestellt.

Es wird der bifunktionelle aliphatische Aufbau des Reaktivverdünners mit einem Molekulargewicht von etwa 500 bis 800 bevorzugt.

Als Monoepoxide finden Verwendung aliphatische α-Epoxide verschiedener Kettenlänge wie Ethylenoxid, Propylenoxid, Butylenoxid, Stearyloxid gegebenenfalls auch Cyclohexanmonoepoxid oder Styrolmonoepoxid. Bevorzugt werden Glycidylester von gesättigten linearen und verzweigten Monocarbonsäuren wie ein Glycidylester der Versaticsäure oder Stearylglycidylester oder die Glycidylester von ungesättigten Monocarbonsäuren wie Glycidylmethacrylat oder Ölsäureglycidylester, aber auch Benzoesäureglycidylester. Eine andere Gruppe von Monoepoxiden sind die Glycidylether wie Butylglycidylether, Ethylhexylglycidylether, Allylglycidylether, Tetrahydrofurfurylglycidylether, Kresylglycidylether oder Phenylglycidylether. Besonders bevorzugt werden die Glycidylester α-verzweigter Monocarbonsäuren, wie Glycidylester der Versaticsäure.

Bei Verwendung von cyclischen oder gegebenenfalls auch aromatischen Dicarbonsäuren werden längermolekulare, aliphatische Ketten im Monoepoxid verwendet. Um niedrigere Abspaltprodukte zu haben, werden rein aliphatische Polycarbonsäure-hydroxyalkylester mit niedrigmolekularem Rest A bevorzugt, der gegebenenfalls ungesättigt ist.

Als typische difunktionelle Isocyanate eignen sich aliphatische, cycloaliphatische und/oder eventuell auch aromatische Polyisocyanate mit zwei Isocyanatgruppen pro Molekül. Beispiele hierfür sind die Isomeren oder Isomerengemische des Toluylendiisocyanat, 4,4'-Diphenylmethan-diisocyanat, sowie ihre Hydrierungsprodukte wie Dicyclohexylmethan-diisocyanat. Bevorzugt werden aliphatische Diisocyanate der Formel

$$O=C=N-\left(CR_2\right)_r-N=C=O$$

worin r eine ganze Zahl von 2 bis 12, insbesondere 6 bis 8 ist und R, das gleich oder verschieden sein kann, Wasserstoff oder einen niedrigen Alkylrest mit 1 bis 8 C-Atomen, vorzugsweise 1 oder 2 C-Atomen darstellt. Beispiele hierfür sind Hexamethylendiisocyanat, 1,6-Diisocyanato-2,2,4-trimethylhexan, Isophorondiisocyanat.

Geeignete Reaktivverdünner erhält man auch, wenn die beiden funktionellen Gruppen mit unterschiedlichen reaktiven Gruppen besetzt sind. So kann man eine blockierte Isocyanatgruppe mit einem β-Hydroxyalkylester dadurch kombinieren, daß man erst 1 Mol eines aliphatischen Diisocyanats mit einem Mol monofunktioneller Schutzgruppen und dann die restliche Isocyanatgruppe mit Verbindungen umsetzt, die außer umesterungsfähigen Gruppen noch funktionelle Gruppen enthalten, die mit dem Isocyanat reagieren. Solche Verbindungen sind beispielsweise saure Reaktionsprodukte von α-Epoxiden, Glycidylestern oder -ethern mit Dicarbonsäuren wie Maleinsäure, Fumarsäure, Adipinsäure.

Die Vernetzungsmittel der Komponente B) enthalten zweckmäßig mehr als drei funktionelle Gruppen im Molekül, zweckmäßig mehr als vier. Da es sich hierbei um Harze bzw. harzartige Reaktionsprodukte handelt, die ein Gemisch aus zahlreichen Verbindungen darstellen, wird unter dieser Definition verstanden, daß die Einzelverbindungen, die in diesen Harzen oder harzartigen Gemischen vorliegen, jeweils mindestens drei funktionelle Gruppen enthalten. Die Funktionalität muß größer als 2, bevorzugt 3 und höher liegen, weil sonst Schwierigkeiten bei der Herstellung von lösemittelbeständigen Filmen entstehen. Ihre Reaktivität erhalten die Vernetzungsmittel über blockierte Isocyanatgruppen und/oder bevorzugt über umesterungsfähige Estergruppen. Ihre Herstellung erfolgt nach den schon weiter oben genannten Patenten nach dem Stand der Technik. Diese Vernetzungsmittel haben damit im Vergleich zu den Reaktivverdünnern automatisch ein höheres Molekulargewicht und eine höhere Viskosität.

Das Grundharz und die als Vernetzer eingesetzte Komponente B) können kalt gemischt oder auch bei erhöhter Temperatur präkondensiert werden. Dabei reagiert das Grundharz mit der Komponente B) in einem gewissen Umfang, ohne daß das Gemisch jedoch seine Hitzehärtbarkeit und die Eigenschaft, durch

Protonisieren mit Säuren wasserlöslich gemacht werden zu können, verliert. Die Komponente A) wird kalt zugemischt.

Durch Protonosieren mit Säuren wird das kationische Kunstharz-Bindemittel in an sich bekannter Weise wasserverdünnbar gemacht. Beispiele für Säuren sind Ameisensäure, Essigsäure, Propionsäure, Milchsäure, Zitronensäure, Malonsäure, Acrylsäure, Phosphorsäure oder Alkylphosphorsäure. Monobasische niedrigmolekulare organische Carbonsäuren werden bevorzugt. Es muß mindestens so viel Säure zugegeben werden, daß eine stabile Emulgierung des kationischen Basisharzes erfolgt. Ein Überschuß an Säure, d.h. ein Neutralisationsgrad über 100%, ist zweckmäßig zu vermeiden. Der MEQ-Wert (Milliäquivalente Säure pro 100 g Festharz) liegt im allgemeinen zwischen 20 und 80. Es wird ein niedriger MEQ-Wert angestrebt, um ein möglichst hohes Abscheideäquivalent zu erhalten.

Das Überzugsmittel kann zusätzlich übliche lacktechnische Zusatzstoffe wie Antikratermittel, Verlaufmittel, Antischaummittel usw. enthalten. Naturgemäß sind solche Zusatzstoffe auszuwählen, die mit Wasser bei saurem bis neutralem pH-Wert keine störkenden Reaktionen eingehen, keine störenden Fremdionen einschleppen und bei längerem Stehen nicht in nichtaufrührbarer Form ausfallen. d.h. auch nach längerem Stehen muß sich das Überzugsmittel durch Rühren in eine brauchbare Dispersion überführen lassen.

Die Vernetzung des Basisharzes mit den Komponenten A) und B) kann gegebenenfalls durch Zusatz von stark basischen tertiären Aminen und/oder aktiven Metallverbindungen beschleunigt werden. Eine besondere, manchmal synergistische Wirkung wird erreicht durch die Kombination von basischem Medium des abgeschiedenen Amino-Basisharzes und den Metallkatalysatoren.

Zur Katalyse des Umesterungsverfahrens ist im allgemeinen ein höherer Katalysatorgehalt notwendig als für die Umsetzung des Basisharzes mit den blockierten Polyisocyanaten. Insgesamt liegt der Gehalt an solchen Katalysatoren im Bereich von etwa 0.01 bis 10 Gew.-%, bezogen auf das Gesamtgewicht der Komponenten. Als Katalysatoren werden zweckmäßig Metalloxide, Metallsalze oder Metallkomplexe von ein- oder mehrwertigen Metallen eingesetzt.

Für die Reaktion der blockierten Polyisocyanate wird 0.01 bis 2 Gew.-% Dibutylzinndilaurat, für die Umesterung 2 bis 8 Gew.-% Bleioctoat bevorzugt. Die Metallkatalysatoren können auch in fein verteilter Form als Pigmente wie Bleisilikat eindispergiert werden. Wasserverdünnbare Metallsalze sind ebenfalls als Umesterungskatalysatoren geeignet, wenn das Metall als Verbindung oder Komplex in fein verteilter Form mit dem Lack abgeschieden wird. Bevorzugt sind Katalysatoren, die im EC-Bad schlecht löslich sind und sich nach der elektrophoretischen Abscheidung im abgeschiedenen Film beim Einbrennen gleichmäßig verteilen.

Das Überzugsmittel kann zum Senken der Viskosität, zum Steuern der Abscheidespannung und zum Verbessern der Haftung und des Verlaufs bis zu ungefähr 15 Gew.-% organische Lösemittel enthalten. Es wird ein möglichst niedriger Gehalt an organischen Lösemitteln angestrebt, besonders unter 10 Gew.-%.

Als Lösemittel dienen Alkohole, Glykolether, Ketoalkohole, gegebenenfalls unter Zusatz von aliphatischen und/oder aromatischen Kohlenwasserstoffen verschiedener Kettenlänge.

Bei der Auswahl muß berücksichtigt werden, daß das Vernetzungsmittel nicht wasserlöslich ist und Anteile von wasserunlöslichen Lösemitteln gegebenenfalls den Dispergiervorgang erleichtern und stabilisieren können. Mit steigendem Lösemittelgehalt verschlechtert sich der Umgriff, die abgeschiedene Schichtdicke erhöht sich und es können Überbeschichtungen auftreten. Wasserunlösliche Lösemittel wirken hierbei stärker als wasserlösliche. Der Anteil an wasserunlöslichen Lösemitteln wie Hexylglycol, Phenoxypropanol oder 2.2.4-Trimethylpentandiol-1.3-monoisobuttersäureester soll möglichst niedrig, bevorzugt unter 1 Masse-% liegen. Die eventuell für die Herstellung der Harze notwendigen aprotischen Lösemittel können gegebenenfalls nach der Herstellung des Produktes gegen andere Lösemittel durch Abdestillieren ausgetauscht werden.

Der Feststoffgehalt des Überzugsmittel gemäß der Erfindung beträgt nach Verdünnen mit Wasser zweckmäßig 5 bis 50 Gew.-%. Beim Einstellen des Lackes auf einen höheren Festkörper von 25 bis 50 Gew.-%, bevorzugt 30 bis 45 Gew.-%, werden wasserverdünnbare Einbrennlacke erhalten, die durch Tauchen, Spritzen. Walzen usw. auf das zu lackierende Objekt aufgebracht werden können. Verdünnt man dagegen auf einen Festkörper von 5 bis 30 Gew.-%, vorzugsweise 10 bis 20 Gew.-%, so ist der Lack für die elektrophoretische Abscheidung geeignet. Das Bad wird ständig gerührt, um an der Kathodenoberfläche eine gleichmäßige Temperatur aufrechtzuerhalten und ein Absetzen der unlöslichen Bestandteile der Dispersion, z.B. der Pigmente zu verhindern. Der pH-Wert des Lackes liegt im allgemeinen zwischen 4.0 und 7.5, vorzugsweise zwischen 5.0 und 6.5. Liegt der pH-Wert zu niedrig, so ist mit einem Angriff der Säure auf das Eisen von Becken, Rohrleitungen und Pumpen zu rechnen. Die elektrophoretische Abscheidung erfolgt zweckmäßig frühestens 24 Stunden nach Herstellen des Bades. Während dieser Zeit wird zweckmäßig kontinuierlich gerührt, um eine gleichmäßige Verteilung zu erhalten. Als Anode werden elektrisch leitfähige, nicht korrodierende Elektroden, z.B. aus nichtrostendem Stahl oder Graphit verwendet. Der an der Kathode zu beschichtende Gegenstand und die Anode werden, wie für die elektrophoretische Abscheidung bekannt, in ein wäßriges Bad eingetaucht. Es können alle metallisch leitenden Werkstücke beschichtet werden, wie Kupfer, Aluminium, Zinn, Zink, Eisen und Legierungen dieser Metalle. Während des Abscheidens wird das Bad bei Temperaturen von zweckmäßig etwa 15 bis 35°C gehalten. Festkörper, Abscheidungstemperatur und -zeit, sowie Spannung werden so gewählt,

daß die gewünschte Schichtstärke nach Abspülen mit Ultrafiltrat und/oder Wasser und Einbrennen der Temperaturen von etwa 150 bis 230°C erhalten wird. So steigt z.B. die Schichtstärke mit zunehmender Beschichtungszeit und Abscheidespannung. Beim Anlegen eines elektrischen Stromes mit einer Spannung von zweckmäßig 50 bis 500 Volt zwischen metallisch leitendem Werkstück und einer Gegenelektrode wird das wasserverdünnbare Basisharz an der Kathode koaguliert. Es transportiert hierbei das wasserunlösliche Vernetzungsmittel, Pigmente, Katalysatoren usw. mit. Hierbei kann sich das Verhältnis von Pigment zum Kunstharz-Bindemittel im abgeschiedenen Film verschieben. Gleichzeitig werden Wasser und die zur Neutralisation verwendete Säure im Bad angereichert. Zum Nachfüllen müssen daher konzentrierte Lacke verwendet werden, die diese Verschiebung durch geänderte Mengenverhältnisse ausgleichen. Diese Korrektur kann auch durch geeignete apparative Einrichtungen, z.B. Elektrodialyseverfahren oder Ultrafiltration erfolgen.

Das konzentrierte, mit Wasser zu verdünnende Bindemittel gemäß der Erfindung mit einem Festkörper von etwa 85 bis 60 Gew.-% kann in üblicher Weise mit Kugelmühle, Dreiwalze oder Perlmühle pigmentiert werden. Hierzu können übliche Pigmente, Füllstoffe, Korrosionsschutzinhibitoren und Lackhilfsmittel verwendet werden, solange sie mit Wasser im sauren bis neutralen Medium keine störenden Reaktionen eingehen, keine wasserlöslichen Fremdionen einschleppen und beim Altern nicht so ausfallen, daß sie nicht wieder aufgerührt werden können. Die Lacke sind besonders für die Elektrotauchlackierung von Metallen geeignet und geben nach Einbrennen von bevorzugt 15 bis 45 Minuten bei 160 bis 190°C glatte glänzende Filme mit guter Alterungsstabilität, gleichmäßiger Schichtdicke, verbesserter Haftfestigkeit, höherer Härte und Elastizität, sowie sehr guter Korrosionsbeständigkeit. Das Pigment-Bindemittelverhältnis ist abhängig von Dispergierfähigkeit und Viskosität des Bindemittels und liegt im allgemeinen zwischen 0.1 zu 1 und 1.5 zu 1. Wie die Vergleichsversuche zeigen, geben die erfindungsgemäßen Bindemittel beim Einbrennen überraschenderweise eine dickere Schicht unter gleichen Abscheidebedingungen.

<u>Kunstharz-Bindemittel I</u>

Zu einer Lösung von 283.2 g Polyglycidylether auf Basis Bisphenol A mit einem Epoxid-Äquivalentgewicht von 472 (Epikote 1001 ®) in 161 g Ethylenglykol-monobutylether werden 21 g Diethanolamin, 10.2 g 3(-N.N-Dimethylamino)propylamin und 61.6 g eines Adduktes von 116 g 1.6-Diaminohexan mit 500 g Cardura E 10 ®, einem Glycidylester der Versaticsäure ®, zugegeben. Die Mischung von Polyether und den Aminen reagiert 4 Stunden lang unter Rühren bei Temperaturen von 85 bis 90°C. Zum Vervollständigen der Reaktion wird dann noch 1 Stunde auf 120°C geheizt. Der Epoxidgehalt ist dann Null.
Aminzahl: 98 mg KOH/G Festharz;
Festkörpergehalt: etwa 70 Gew.-%.

<u>Kunstharz-Bindemittel II</u>

430 g technisches Xylol, 2g Triphenylphosphin, 102 g Versaticsäure und 1300 g Polyglycidylether auf Basis Bisphenol A mit einem Epoxidäquivalentgewicht von 650 werden unter Stickstoff zum Auskreisen von Wasser auf etwa 150°C erhitzt. Diese Temperatur wird gehalten, bis die Säurezahl null ist. Diese heiße Lösung wird dann langsam zu einer Lösung von 255 g Ethylendiamin in 450 g n-Butanol zugegeben, wobei die Temperatur bis auf etwa 90°C ansteigt. Zwei Stunden nach Zugabe wird unter vermindertem Druck bei 150°C Lösungsmittel und überschüssiges Amin sorgfältig abdestilliert. Aminreste werden gegebenenfalls durch Wasserdampdestillation entfernt. Es wird mit Butylglykol und sekundärem Butanol (1:3) auf einen Festkörper von 70.9 Gew.-% verdünnt.
Aminzahl: 94 mg KOH/g Festharz
Viskosität: 6.5 Pas (nach Verdünnen auf 60 Gew.-% mit Butylglykol bei 25°C.

<u>Reaktivverdünner A1</u>

606 g Sebacinsäure werden in einem Reaktionskolben mit Thermometer, Rückflußkühler und Zulauftrichter in 600 g wasserfreiem Dioxan bei ca. 90°C gelöst. Nach Kühlen auf 60°C werden 175 g Butylenoxid und 9.9 g eines Chrom-Katalysators auf Basis Chrom-III-octoat zugegeben. Nach 30 Minuten werden innerhalb einer Stunde weitere 300 g Butylenoxid langsam zugegeben. Anschließend wird auf 90°C erwärmt und bei dieser Temperatur gehalten bis die Säurezahl unter 0.5 liegt. Abdestillieren des Lösemittels unter Vakuum. Viskosität: 264 mPas bei 25°C.
Molmasse (berechnet) : 346.
Säurezahl: 0
Funktionalität: 2
Masse-Verhältnis der aliphatischen zu polaren Gruppen: 224:122.

Reaktivverdünner A2

1400 g einer konjugiert ungesättigten Monofettsäure (Ricinenfettsäure) werden zusammen mit 1300 g eines Glycidylesters der Versaticsäure (Cardura E-10 der Shell) in 2.5 Stunden bis auf 195°C erwärmt. Nach Erreichen einer Säurezahl unter 0.5 wird abgekühlt und abgefüllt.
Viskosität: 154 mPas bei 25°C.
Molmasse (berechnet): 535
Säurezahl: 0.2 (mg/KOH/g).
Masse-Verhältnis der aliphatischen zu polaren Gruppen:430:105.

Reaktivverdünner A3

807 g Sebacinsäure werden zusammen mit 1191 g Glycidylmethacrylat, 2 g Triphenylphosphin und 3.6 g Hydrochinon-monomethylether auf 100°C erwärmt und diese Temperatur gehalten bis die Säurezahl nicht mehr weiter abfällt.
Viskosität: 2 Pa•s bei 25°C.
Molmasse (berechnet): 486
Säurezahl: 6.6 (mg KOH/g).
Funktionalität: 2.
Masse-Verhältnis der aliphatischen zu polaren Gruppen:276:210.

Reaktivverdünner A4

730 g Adipinsäure werden zusammen mit 3000 g Epoxid Nr. 8 (Procter & Gamble Ltd.), einem C 12 bis C 14-Alkyl-Glycidylether mit einem Epoxy-Äquivalentgewicht von 300 in etwa 3 Stunden bis auf 190°C erwärmt und bei dieser Temperatur gehalten bis eine Säurezahl von unter 0.5 erreicht ist.
Viskosität: 210 mPas bei 25°C
Molmasse (berechnet): 746
Säurezahl: 0.1 (mg KOH/g)
Funktionalität: 2
Masse-Verhältnis der aliphatischen zu polaren Gruppen: 592:154.

Reaktivverdünner A5

1055 g Methylethylketoxim werden auf 80°C erwärmt, 1.3 g Zink-Acetylacetonat zugegeben und in 3 Stunden 1260 g Trimethylhexamethylendiisocyanat zugetropft. Durch Kühlen wird ein Überschreiten der Reaktionstemperatur verhindert. Danach wird solange bei 80°C gehalten, bis die NCO-Zahl 0 % beträgt. Das Verhältnis von aliphatischen zu polaren Gruppen beträgt 214:170.
Molmasse (berechnet): 384
Viskosität (60/40 in Ethylenglykol-monobutylether): 58 mPa•s

Vernetzungsmittel B1

1248 g Cardura E ® werden auf 100°C unter Inertgas erwärmt und dann unter gutem Rühren in mehreren Portionen 460.8 g Trimellithsäureanhydrid zugegeben. Unter Ausnutzen der exothermen Reaktion wird bis auf 195°C geheizt. Wenn das Harz klar ist, wird auf 145°C abgekühlt und 1.8 ml Benzyldimethylamin als Katalysator zugegeben. Nach Erreichen einer Säurezahl von 2 mg KOH/g Festharz wird auf 100°C abgekühlt und mit 712 g Ethylenglykolmonobutylether verdünnt. Viskosität der Lösung bei 25°C : 9.2 Pa•s. Das Masse-Verhältnis aromatische zu aliphatische Verbindungen beträgt 27:73. Funktionalität: etwa 5 bis 8.
Festkörpergehalt : etwa 70 Gew.-% (nach 40 Minuten Erwärmen auf 180°C).

Vernetzungsmittel B2

514.2 g Hydroxipivalinsäure-neopentylglykol und 109.2 g Isophthalsäure werden bei ansteigender Temperatur bis maximal 238°C bis auf eine Säurezahl von 13.5 verestert, danach auf 180°C abgekühlt und 276 g Trimellithsäureanhydrid zugegeben. Es wird langsam auf 240°C aufgeheizt und diese Temperatur gehalten, bis die Säurezahl 108 beträgt.
Viskosität: 1.0 Pa•s (nach Verdünnen auf 50 Gew.-% mit Monobutylglykolether bei 25°C).

544 g Vorprodukt werden mit 300 g Ethylenglykolmonobutylether, 2 g 4-Methyl-2.6-di-tert-butylphenol und 2 g Triphenylphosphit verdünnt. Nach Zusatz von 156 g Glycidylmethacrylat wird so lange bei 80°C gehalten, bis die Säurezahl kleiner als 2 ist. Falls die Säurezahl über 2 stehenbleibt und kein Epoxid mehr in der Lösung nachzuweisen ist, kann zusätzlich etwas Glycidylmethacrylat nachgegeben werden.

Festkörper (30 Min. 180°C) : ca. 70 Gew.-%
Säurezahl : 0.6 mg KOH/g Festharz
Hydrier-Jodzahl : 38
Viskosität: 2.9 Pa•s (nach Verdünnen auf 60 Gew.-% mit Monobutylglykolether bei 25°C)
Das Masse-Verhältnis aromatische zu aliphatische Verbindungen beträgt 34:66.

Vernetzungsmittel B3

571 g ε-Caprolactam werden vorsichtig aufgeschmolzen und bei einer Temperatur von 80°C 1050 g DESMODUR N 3390/90 ® (90%ig in Butylacetat/Solventnaphtha 100) in 2 Stunden langsam zugegeben, wobei die Temperatur nicht über 100°C ansteigen soll. Es wird solange bei 100°C gehalten , bis die NCO-Zahl unter 0.1% liegt und anschließend mit 327 g Ethylenglykolmonobutylether verdünnt. Bei 75 bis 80°C wird unter Vakuum Butylacetat-Solventnaphtha abdestilliert und auf 80% Festkörper mit Ethylenglykolmonobutylether eingestellt.
Viskosität der Lösung : 9.4 Pa•s
Molekulargewicht etwa 843
Funktionalität: 3

Beispiel 1

1714.2 g Bindemittel I werden mit 685.8 g Ethylenglykolmonobutylether vermischt. Mit Hilfe eines schnell laufenden Dissolvers werden 38.4 g Ruß, 384 g Aluminiumsilikat und 192 g Bleisilikat in die Bindemittel-Lösung eindispergiert und anschließend in einer Laborperlmühle vermahlen.

626.6 g dieser Mahlpaste werden 199.5 g Bindemittel I, 170.5 g Vernetzungsmittel B1, 59.7 g Reaktivverdünner A1, 12 g Bleioctoat (31%ig) und 20 g Eisessig zugesetzt, mit Hilfe eines Dissolvers gut vermischt und anschließend mit 3500 g voll entsalztem Wasser verdünnt zu einem KTL-Lack mit den Badwerten:
Festkörper: 14.5 Gew.-% (nach 30 Minuten Einbrennen bei 180°C)
$MEQ_S$-Wert : 52 mval Säure/100 g Festkörper
Spez. Badleitfähigkeit: 650 /Scm$^{-2}$

Beispiel 2

626.6 g Mahlpaste aus Beispiel 1 werden 216.7 g Bindemittel I, 170.5 g Vernetzungsmittel B1, 47.7 g Reaktivverdünner A2, 12 g Bleioctoat (31%ig) und 20 g Eisessig zugesetzt. Mit Hilfe eines Dissolvers werden alle Komponenten gut vermischt und mit 3500 g voll entsalztem Wasser verdünnt.

Beispiel 3

Herstellung analog Beispiel 2 unter Verwendung von Reaktivverdünner A4.

Vergleichsbeispiel 1

Herstellung analog Beispiel 2, jedoch ohne Zusatz von Reaktivverdünner. Die fehlende Harzmenge wurde durch Bindemittel I ersetzt.

Die Badwerte der Beispiele 2 und 3 und des Vergleichsbeispiels 1 gleichen denen des Beispiels 1.

Beispiel 4

795.4 g des Bindemittels II werden mit 318.2 g Ethylenglykol-monobutylether verdünnt und 16 g Ruß, 160 g Aluminiumsilikat und 8 g Bleisilikat mit Hilfe eines schnell laufenden Dissolvers in die Bindemittel-Lösung eindispergiert und anschließend in einer Laborperlmühle vermahlen.

648.8 g der Mahlpaste werden mit 171.6 g Bindemittel II, 57.6 g Reaktivverdünner A3 und 164.8 g Vernetzungsmittel B2 und 23 g Ameisensäure (50%ig in Wasser) vermischt. Anschließend wird mit 3500 g vollentsalztem Wasser verdünnt.
Festkörper : 14.8 Gew.-%
pH-Wert (20°C) = 5.7
$MEQ_S$-Wert = 52 mval Säure/g Festkörper
Spez. Badleitfähigkeit (20°C) = 1510μScm$^{-1}$

Vergleichsbeispiel 2

Dieses Vergleichsbeispiel wird analog dem Vergleichsbeispiel 1 durchgeführt, jedoch ohne Reaktivverdünner, wobei die fehlende Harzmenge durch das Bindemittel II ersetzt wird. Die Badwerte entsprechen denen des Beispiels 4.

Die in den Beispielen und Vergleichsbeispielen erhaltenen Werte sind in der nachfolgenden Tabelle 1 zusammengestellt.

Beispiel 5

805.7 g des Bindemittels I werden mit 311.1 g Ethylenglykol-monobutylether verdünnt. 16 g Ruß, 160 g Aluminiumsilikat und 8 g Bleisilikat werden mit Hilfe eines schnell laufenden Dissolvers in die Bindemittel-Lösung eindispergiert und anschließend in einer Laborperlmühle vermahlen.

648.8 g der Mahlpaste werden mit 171.5 g Bindemittel I, 57.6 g Reaktivverdünner A5, 164.5 g Vernetzungsmittel B1 und 23 g Ameisensäure (50 %ig in Wasser) vermischt. Anschließend wird mit 3500 g vollentsalztem Wasser verdünnt.
Festkörper: etwa 15 Gew.-%
pH-Wert (20°C):5.6
$MEQ_S$-Wert : 50 mval Säure/g Feskörper
Spez. Badleitfähigkeit (20°C): 1460 $\mu Scm^{-1}$

TABELLE 1

| | Beispiel 1 | Beispiel 2 | Beispiel 3 | Vergleichs-beispiel 1 | Beispiel 4 | Vergleichs-beispiel 2 | Beispiel 5 |
|---|---|---|---|---|---|---|---|
| Badtemperatur | 32°C | 32°C | 32°C | 32°C | 30°C | 30°C | 32°C |
| Abscheidespannung | 250 V | 260 V | 280 V | 240 V | 220 V | 220 V | 160 V |
| Beschichtungszeit | 2 min | 2 min | 2 min | 2 min | 90 sec. | 90 sec. | 2 min |
| Schichtstärke | 25 µm | 28 µm | 24 µm | 16 µm | 23 µm | 17 µm | 24 µm |
| Lösemittel-Gehalt | 8.0 % | 8.1 % | 8.1 % | 8.5 % | 8.5 % | 9.0 % | 8.2 % |

*) Die Abscheidung erfolgt nach 48 Stunden offenem Rühren der Lacke

**Patentansprüche für die Vertragsstaaten: BE, DE, FR, GB, IT, NL, SE**

1. Kathodisch abscheidbares wäßriges Elektrotauchlack-Überzugsmittel enthaltend durch Protonisieren mit Säuren wasserverdünnbare Aminoepoxidharze, Amino-poly(meth)acrylharze, aminogruppenhaltige Polybutadienöle und/oder Amino-polyurethanharze mit einer Aminzahl von 30 bis 150 und einer Hydroxylzahl von 50 bis 500 als Bindemittel, Pigmente, Füllstoffe, Korrosionsschutzinhibitoren, Lackhilfsmittel, gegebenenfalls Katalysatoren und in einer Menge von bis zu 15 Gew.-%, bezogen auf das Gesamtgewicht des Überzugsmittels, organische Lösungsmittel, sowie mit dem Bindemittel beim Einbrennen über 110°C unter Vernetzung reagierende unter Vernetzung reagierende Verbindungen, dadurch gekennzeichnet, daß die mit dem Bindemittel beim Einbrennen über 110°C unter Vernetzung reagierenden Verbindungen eine Mischung sind aus

A) 90 bis 10 Masseteilen, bezogen auf die Gesamtmasse von A und B, Verbindungen oder Gemische davon, die eine oder zwei blockierte Isocyanatgruppen und/oder umesterungs- oder umamidierungsfähige Gruppen als funktionelle Gruppen enthalten, die bei Einbrenntemperaturen über 110°C mit dem wasserverdünnbaren Bindemittel reagieren, und ein mittleres Molekulargewicht ($\overline{Mn}$) von weniger als 1500 haben, wobei diese Verbindungen, wenn sie als funktionelle Gruppen nur blockierte Isocyanatgruppen enthalten, ein mittleres Molekulargewicht ($\overline{Mn}$) von weniger als 750 haben, und

B) 10 bis 90 Masseteilen, bezogen auf die Gesamtmasse von A und B, Verbindungen oder Gemische davon, die pro Molekül mindestens drei blockierte Isocyanatgruppen und/oder umesterungs- oder umamidierungsfähige Gruppen als funktionelle Gruppen enthalten, die bei Einbrenntemperaturen über 110°C mit dem wasserverdünnbaren Bindemittel reagieren, und ein mittleres Molekulargewicht ($\overline{Mn}$) von 750 bis 10 000 haben, wobei diese Verbindungen, wenn sie als funktionelle Gruppen umesterungs- oder umamidierungsfähige Gruppen enthalten, ein mittleres Molekulargewicht ($\overline{Mn}$) von mindestens 1500 haben,

und daß der Gehalt an organischen wasserunlöslichen, hochsiedenden Lösemitteln, bezogen auf die Gesamtmasse des Überzugsmittels, unter 5 Masse-% liegt.

2. Überzugsmittel nach Anspruch 1, dadurch gekennzeichnet, daß die Komponente A) aliphatische Verbindungen sind, die ein Masse-Verhältnis der aliphatischen Kohlenwasserstoff-Gruppen zu polaren Gruppen von 1:1 bis 8:1 haben.

3. Überzugsmittel nach Anspruch 2, dadurch gekennzeichnet, daß die Komponente A) geradkettige oder verzweigte aliphatische Verbindungen sind.

4. Überzugsmittel nach einem der Ansprüche 1 bis 3, dadurch gekennzeichnet, daß die Komponente A) als funktionelle Gruppen nur umesterungs- oder umamidierungsfähige Gruppen enthält und bei 25°C flüssig ist und eine Glasübergangstemperatur Tg von weniger als 20°C hat.

5. Überzugsmittel nach einem oder mehreren der Ansprüche 1 bis 4, dadurch gekennzeichnet, daß die Komponente B) bei 25°C fest oder harzartig ist.

6. Überzugsmittel nach einem oder mehreren der Ansprüche 1 bis 5, dadurch gekennzeichnet, daß die Komponente B) aus aliphatischen und gegebenenfalls zusätzlich aromatischen Verbindungen hergestellt ist, wobei das Masse-Verhältnis von aliphatischen zu aromatischen Verbindungen im Bereich von 1:1 bis 1:0 liegt.

7. Überzugsmittel nach einem oder mehreren der Ansprüche 1 bis 6, dadurch gekennzeichnet, daß die Komponente A) und/oder die Komponente B) sowie die durch Protonisieren mit Säuren wasserverdünnbaren Bindemittel miteinander reaktionsfähige olefinische Doppelbindungen enthalten.

8. Überzugsmittel nach einem oder mehrern der Ansprüche 1 bis 7, dadurch gekennzeichnet, daß auf 100 Masseteile des durch Protonisieren mit Säuren wasserverdünnbaren Bindemittels 10 bis 80 Masseteile der Komponenten A) und B) entfallen.

9. Überzugsmittel nach einem oder mehreren der Ansprüche 1 bis 8, dadurch gekennzeichnet, daß der Gehalt an organischen wasserunlöslichen hochsiedenden Lösemitteln, bezogen auf die Gesamtmasse des Überzugsmittels, unter 1 Masse-% liegt.

10. Verwendung des Elektrotauchlack-Überzugsmittel gemäß einem oder mehreren der Ansprüche 1 bis 9 zum Beschichten von Gegenständen mit elektrisch leitender Oberfläche.

**Patentansprüche für die Vertragsstaaten: ES, AT**

1. Verfahren zum Beschichten von Gegenständen mit elektrisch leitender Oberfläche durch kathodische Abscheidung eines wäßrigen Elektrotauchlack-Überzugsmittels, enthaltend durch Protonisieren mit Säuren wasserverdünnbare Aminoepoxidharze, Amino-poly(meth)acrylharze, aminogruppenhaltige Polybutadienöle und/oder Amino-polyurethanharze mit einer Aminzahl von 30 bis 150 und einer Hydroxylzahl von 50 bis 500 als Bindemittel, Pigmente, Füllstoffe, Korrosionsschutzinhibitoren, Lackhilfsmittel, gegebenenfalls Katalysatoren und in einer Menge von bis zu 15 Gew.-%, bezogen auf das Gesamtgewicht des Überzugsmittels, organische Lösungsmittel, sowie mit dem Bindemittel beim Einbrennen über 110°C unter Vernetzung reagierende Verbindungen, dadurch gekennzeichnet, daß die mit dem Bindemittel beim Einbrennen über 110°C unter Vernetzung reagierenden Verbindungen eine Mischung sind aus

A) 90 bis 10 Masseteilen, bezogen auf die Gesamtmasse von A und B, Verbindungen oder Gemische devon, die eine oder zwei blockierte Isocyanatgruppen und/oder umesterungs- oder umamidierungsfähige Gruppen als funktionelle Gruppen enthalten, die bei Einbrenntemperaturen über 110°C mit dem wasserverdünnbaren Bindemittel reagieren, und ein mittleres Molekulargewicht ($\overline{Mn}$) von weniger als 1500 haben, wobei diese Verbindungen, wenn sie als funktionelle Gruppen nur blockierte Isocyanatgruppen enthalten, ein mittleres Molekulargewicht ($\overline{Mn}$) von weniger als 750 haben, und

B) 10 bis 90 Masseteilen, bezogen auf die Gesamtmasse von A und B, Verbindungen oder Gemische davon, die pro Molekül mindestens drei blockierte Isocyanatgruppen und/oder umesterungs- oder umamidierungsfähige Gruppen als funktionelle Gruppen enthalten, die bei Einbrenntemperaturen über 110°C mit dem wasserverdünnbaren Bindemittel reagieren, und ein mittleres Molekulargewicht ($\overline{Mn}$) von 750 bis 10 000 haben, wobei diese Verbindungen, wenn sie als funktionelle Gruppen umesterungs- oder umamidierungsfähige Gruppen enthalten, ein mittleres Molekulargewicht ($\overline{Mn}$) von mindestens 1500 haben,

und daß der Gehalt an organischen wasserunlöslichen, hochsiedenden Lösemitteln, bezogen auf die Gesamtmasse des Überzugsmittels, unter 5 Masse-% liegt.

2. Verfahren nach Anspruch 1, dadurch gekennzeichnet, daß die Komponente A) aliphatische Verbindungen sind, die ein Masse-Verhältnis der aliphatischen Kohlenwasserstoff-Gruppen zu polaren Gruppen von 1:1 bis 8:1 haben.

3. Verfahren nach Anspruch 2, dadurch gekennzeichnet, daß die Komponente A) geradkettige oder verzweigte aliphatische Verbindungen sind.

4. Verfahren nach einem der Ansprüche 1 bis 3, dadurch gekennzeichnet, daß die Komponente A) als funktionelle Gruppen nur umesterungs- oder umamidierungsfähige Gruppen enthält und bei 25°C flüssig ist und eine Glasübergangstemperatur Tg von weniger als 20°C hat.

5. Verfahren nach einem oder mehreren der Ansprüche 1 bis 4, dadurch gekennzeichnet, daß die Komponente B) bei 25°C fest oder harzartig ist.

6. Verfahren nach einem oder mehreren der Ansprüche 1 bis 5, dadurch gekennzeichnet, daß die Komponente B) aus aliphatischen und gegebenenfalls zusätzlich aromatischen Verbindungen hergestellt ist, wobei das Masse-Verhältnis von aliphatischen zu aromatischen Verbindungen im Bereich von 1:1 bis 1:0 liegt.

7. Verfahren nach einem oder mehreren der Ansprüche 1 bis 6, dadurch gekennzeichnet, daß die Komponente A) und/oder die Komponente B) sowie die durch Protonisieren mit Säuren wasserverdünnbaren Bindemittel miteinander reaktionsfähige olefinische Doppelbindungen enthalten.

8. Verfahren nach einem oder mehreren der Ansprüche 1 bis 7, dadurch gekennzeichnet, daß auf 100 Masseteile des durch Protonisieren mit Säuren wasserverdünnbaren Bindemittels 10 bis 80 Masseteile der Komponenten A) und B) entfallen.

9. Verfahren nach einem oder mehreren der Ansprüche 1 bis 8, dadurch gekennzeichnet, daß der Gehalt an organischen wasserunlöslichen hochsiedenden Lösemitteln, bezogen auf die Gesamtmasse des Überzugsmittels, unter 1 Masse-% liegt.

**Claims for the contracting states: BE, DE, FR, GB, IT, NL, SE**

1. Cathodically depositable aqueous electro-dipcoat surface coating containing amino-epoxy resins, aminopoly(meth)acrylate resins, amino-group-containing polybutadiene oils and/or amino-polyurethane resins, water-dilutable by protonation with acids, with an amine value of 30 to 150 and a hydroxyl number of 50 to 500 as binder, pigments, fillers, corrosion inhibitors, paint auxiliary agents, optionally catalysts and in an amount of up to 15 % by weight, relative to the total weight of the surface coating, organic solvents, as well as compounds reacting with the binder with crosslinking on stoving above 110 °C, characterized in that the compounds reacting with the binder with crosslinking on stoving above 110 °C are a mixture of

A) 90 to 10 parts by weight, relative to the total weight of A and B, of compounds or mixtures thereof which contain as functional groups one or two blocked isocyanate groups and/or groups capable of transesterification or transamidation, which at stoving temperatures above 110 °C react with the water-dilutable binder and have an average molecular weight ($\overline{Mn}$) of less than 1500 or, if these compounds only contain blocked isocyanate groups as functional groups, an average molecular weight ($\overline{Mn}$) of less than 750, and

B) 10 to 90 parts by weight, relative to the total weight of A and B, of compounds or mixtures thereof which contain per molecule as functional groups at least three blocked isocyanate groups and/or groups capable of transesterification or transamidation, which at stoving temperatures above 110 °C react with the water-dilutable binder and have an average molecular weight ($\overline{Mn}$) of 750 to 10,000 or, if these compounds contain groups capable of transesterification or transamidation as functional groups, an average molecular weight ($\overline{Mn}$) of at least 1500,

and that the content of organic water-insoluble, high-boiling solvents, relative to the total weight of the surface coating, is less than 5 % by weight.

2. Surface coating according to Claim 1, characterized in that the component A) is aliphatic compounds, which have a weight ratio of the aliphatic hydrocarbon groups to polar groups of 1:1 to 8:1.

3. Surface coating according to Claim 2, characterized in that the component A) is straight-chain or branched aliphatic compounds.

4. Surface coating according to one of Claims 1 to 3, characterized in that the component A) contains as functional groups only groups capable of transesterification or transamidation and is liquid at 25 °C and has a glass transition temperature Tg of less than 20 °C.

5. Surface coating according to one or more of Claims 1 to 4, characterized in that the component B) is solid or resinous at 25 °C.

6. Surface coating according to one or more of Claims 1 to 5, characterized in that the component B) is produced from aliphatic and optionally also aromatic compounds, the weight ratio of aliphatic to aromatic compounds being in the range of 1:1 to 1:0.

7. Surface coating according to one or more of Claims 1 to 6, characterized in that component A) and/or component B) as well as the binders water-dilutable by protonation with acids together contain reactive olefinic double bonds.

8. Surface coating according to one or more of Claims 1 to 7, characterized in that to 100 parts by weight of the binder water-dilutable by protonation with acids are allotted 10-80 parts by weight of components A) and B).

9. Surface coating according to one or more of Claims 1 to 8, characterized in that the content of organic water-insoluble high-boiling solvents, relative to the total weight of the surface coating, is below 1% by weight.

10. Use of the electro-dipcoat surface coating according to one or more of Claims 1 to 9, for the coating of objects with electrically conductive surface.

**Claims for the contracting states: ES, AT**

1. Process for the coating of objects with electrically conductive surface by cathodic deposition of an aqueous electro-dipcoat surface coating containing amino-epoxy resins, amino-poly(meth)acrylate resins, amino-group-containing polybutadiene oils and/or amino-polyurethane resins, water-dilutable by protonation with acids, with an amine value of 30 to 150 and a hydroxyl number of 50 to 500 as binder, pigments, fillers, corrosion inhibitors, paint auxiliary agents, optionally catalysts and in an amount of up to 15 % by weight, relative to the total weight of the surface coating, organic solvents, as well as compounds reacting with the binder with crosslinking on stoving above 110 °C, characterized in that the compounds reacting with the binder with crosslinking on stoving above 110 °C are a mixture of

A) 90 to 10 parts by weight, relative to the total weight of A and B, of compounds or mixtures thereof which contain as functional groups one or two blocked isocyanate groups and/or groups capable of transesterification or transamidation, which at stoving temperatures above 110 °C react with the water-dilutable binder and have an average molecular weight ($\overline{Mn}$) of less than 1500 or, if these compounds only contain blocked isocyanate groups as functional groups, an average molecular weight ($\overline{Mn}$) of less than 750, and

B) 10 to 90 parts by weight, relative to the total weight of A and B, of compounds or mixtures thereof which contain per molecule as functional groups at least three blocked isocyanate groups and/or groups capable of transesterification or transamidation, which at stoving temperatures above 110 °C react with the water-dilutable binder and have an average molecular weight ($\overline{Mn}$) of 750 to 10,000 or, if these compounds contain groups capable of transesterification or transamidation as functional groups, an average molecular weight ($\overline{Mn}$) of at least 1500,

and that the content of organic water-insoluble, high-boiling solvents, relative to the total weight of the surface coating, is less than 5 % by weight.

2. Process according to Claim 1, characterized in that the component A) is aliphatic compounds, which have a weight ratio of the aliphatic hydrocarbon groups to polar groups of 1:1 to 8:1.

3. Process according to Claim 2, characterized in that the component A) is straight-chain or branched aliphatic compounds.

4. Process according to one of Claims 1 to 3, characterized in that the component A) contains as functional groups only groups capable of transesterification or transamidation and is liquid at 25 °C and has a glass transition temperature Tg of less than 20 °C.

5. Process according to one or more of Claims 1 to 4, characterized in that the component B) is solid or resinous at 25 °C.

6. Process according to one or more of Claims 1 to 5, characterized in that the component B) is produced from aliphatic and optionally also aromatic compounds, the weight ratio of aliphatic to aromatic compounds being in the range of 1:1 to 1:0.

7. Process according to one or more of Claims 1 to 6, characterized in that component A) and/or component B) as well as the binders water-dilutable by protonation with acids together contain reactive olefinic double bonds.

8. Process according to one or more of Claims 1 to 7, characterized in that to 100 parts by weight of the binder water-dilutable by protonation with acids are allotted 10-80 parts by weight of components A) and B).

9. Process according to one or more of Claims 1 to 8, characterized in that the content of organic water-insoluble high-boiling solvents, relative to the total weight of the surface coating, is below 1 % by weight.

**Revendications pour les états contractants: BE, DE, FR, GB, IT, NL, SE**

1. Revêtement par électrodéposition cathodique en milieu aqueux contenant des résines amino-époxydes diluables à l'eau par protonisation avec des acides, des résines amino-poly(méth)acryliques, des huiles de polybutadiène contenant des groupes amino et/ou des résines amino-polyuréthane avec un indice d'amine de 30 à 150 et un indice d'hydroxyle de 50 à 500 comme liant, des pigments, des charges, des inhibiteurs de protection contre la corrosion, des adjuvants de laque, éventuellement des catalyseurs, et une quantité allant jusqu'à 15% en poids, par rapport au poids total du revêtement, des solvants organiques, ainsi que des composés réagissant avec le liant avec réticulation lors d'une cuisson au-dessus de 110°C, caractérisé en ce que les composés réagissant avec le liant avec réticulation lors d'une cuisson au-dessus de 100°C sont constitués d'un mélange de

A) 90 à 10 parties en masse, par rapport à la masse totale de A et B, de composés ou de leurs mélanges, qui contiennent un ou deux groupes isocyanate bloqués, et/ou des groupes aptes à la transestérification ou à la transamidation comme groupes fonctionnels, qui réagissent aux températures de combustion supérieures à 110°C avec le liant diluable à l'eau, et qui ont un poids moléculaire moyen ($\overline{Mn}$), inférieur à 1500, ces composés lorsqu'ils ne contiennent comme groupes fonctionnels que des groupes isocyanate bloqués, ayant un poids moléculaire moyen ($\overline{Mn}$) inférieur à 750, et

10 à 90 parties en masse, par rapport à la masse totale de A et B, de composés ou de leurs mélanges, qui contiennent par molécule au moins trois groupes isocyanate bloqués et/ou groupes aptes à la transestérification ou à la transamidation comme groupes fonctionnels, qui réagissent aux températures de combustion supérieures à 110°C avec le liant diluable à l'eau et qui ont un poids moléculaire moyen ($\overline{Mn}$) de 750 à 10 000, ces composés lorsqu'ils contiennent comme groupes fonctionnels des groupes aptes à la transestérification ou à la transamidation, ayant un poids moléculaire moyen ($\overline{Mn}$) d'au moins 1500,

et en ce que la teneur en solvants organiques insolubles dans l'eau à haut point d'ébullition, par rapport à la masse totale du revêtement, est inférieure à 5% en masse.

2. Revêtement selon la revendication 1, caractérisé en ce que le composant A) est constitué de composés aliphatiques qui ont un rapport massique de groupes hydrocarbonés aliphatiques aux groupes polaires de 1:1 à 8:1.

3. Revêtement selon la revendication 2, caractérisé en ce que les composants A) sont des composés aliphatiques à chaîne droite ou ramifiée.

4. Revêtement selon l'une des revendications 1 à 3, caractérisé en ce que le composant A) ne contient comme groupes fonctionnels que des groupes aptes à la transestérification ou à la transamidation et est liquide à 25°C et présente une température de transition vitreuse Tg inférieure à 20°C.

5. Revêtement selon une ou plusieurs des revendications 1 à 4, caractérisé en ce que le composant B) est solide ou résineux à 25°C.

6. Revêtement selon une ou plusieurs des revendications 1 à 5, caractérisé en ce que le composant B) est préparé à partir de composés aliphatiques et éventuellement en outre de composés aromatiques, où le rapport massique des composés aliphatiques aux composés aromatiques se situe dans un intervalle allant de 1:1 à 1:0.

7. Revêtement selon une ou plusieurs des revendications 1 à 6, caractérisé en ce que le composant A) et/ou le composant B) ainsi que les liants diluables à l'eau avec des acides par protonisation contiennent des doubles liaisons oléfiniques réactives les unes avec les autres.

8. Revêtement selon l'une ou plusieurs des revendications 1 à 7, caractérisé en ce qu'à 100 parties en masse du liant diluable à l'eau par protonisation avec des acides correspondent 10 à 80 parties en masse des composants A) et B).

9. Revêtement selon l'une ou plusieurs des revendications 1 à 8, caractérisé en ce que la teneur en solvants organiques à haut point d'ébullition insolubles dans l'eau, par rapport à la masse totale du revêtement, se situe en dessous de 1% en masse.

10. Application du revêtement par électro-déposition selon l'une ou plusieurs des revendications 1 à 9 pour recouvrir des objets à surface conductrice de l'électricité.

**Revendications pour les états contractants: ES, AT**

1. Procédé pour recouvrir des objets ayant une surface conductrice de l'électricité par électrodéposition cathodique d'un revêtement d'électrodéposition aqueux, contenant des résines amino-époxydes diluables à l'eau par protonisation avec des acides, des résines amino-poly(méth)acryliques, des huiles de polybutadiène contenant des groupes amino et/ou des résines amino-polyuréthane avec un indice d'amine de 30 à 150 et un indice d'hydroxyle de 50 à 500 comme liant, des pigments, des charges, des inhibiteurs de protection contre la corrosion, des adjuvants de laque, éventuellement des catalyseurs, et une quantité allant jusqu'à 15% en poids, par rapport au poids total du revêtement, des solvants organiques, ainsi que des composés réagissant avec le liant avec réticulation lors d'une cuisson au-dessus de

110°C, caractérisé en ce que les composés réagissant avec le liant avec réticulation lors d'une cuisson au-dessus de 100°C sont constitués d'un mélange de

A) 90 à 10 parties en masse, par rapport à la masse totale de A et B, de composés ou de leurs mélanges, qui contiennent un ou deux groupes isocyanate bloqués, et/ou des groupes aptes à la transestérification ou à la transamidation comme groupes fonctionnels, qui réagissent aux températures de combustion supérieures à 110°C avec le liant diluable à l'eau, et qui ont un poids moléculaire moyen ($\overline{Mn}$), inférieur à 1500, ces composés lorsqu'ils ne contiennent comme groupes fonctionnels que des groupes isocyanate bloqués, ayant un poids moléculaire moyen ($\overline{Mn}$) inférieur à 750, et

10 à 90 parties en masse, par rapport à la masse totale de A et B, de composés ou de leurs mélanges, qui contiennent par molécule au moins trois groupes isocyanate bloqués et/ou groupes aptes à la transestérification ou à la transamidation comme groupes fonctionnels, qui réagissent aux températures de combustion supérieures à 110°C avec le liant diluable à l'eau et qui ont un poids moléculaire moyen ($\overline{Mn}$) de 750 à 10 000, ces composés lorsqu'ils contiennent comme groupes fonctionnels des groupes aptes à la transestérification ou à la transamidation, ayant un poids moléculaire moyen ($\overline{Mn}$) d'au moins 1500,

et en ce que la teneur en solvants organiques insolubles dans l'eau à haut point d'ébullition, par rapport à la masse totale du revêtement, est inférieure à 5% en masse.

2. Procédé selon la revendication 1, caractérisé en ce que le composant A) est constitué de composés aliphatiques qui ont un rapport massique de groupes hydrocarbonés aliphatiques aux groupes polaires de 1:1 à 8:1.

3. Procédé selon la revendication 2, caractérisé en ce que les composants A) sont des composés aliphatiques à chaîne droite ou ramifiée.

4. Procédé selon l'une des revendications 1 à 3, caractérisé en ce que le composant A) ne contient comme groupes fonctionnels que des groupes aptes à la transestérification ou à la transamidation et est liquide à 25°C et présente une température de transition vitreuse Tg inférieure à 20°C.

5. Procédé selon une ou plusieurs des revendications 1 à 4, caractérisé en ce que le composant B) est solide ou résineux à 25°C.

6. Procédé selon une ou plusieurs des revendications 1 à 5, caractérisé en ce que le composant B) est préparé à partir de composés aliphatiques et éventuellement en outre de composés aromatiques, où le rapport massique des composés aliphatiques aux composés aromatiques se situe dans un intervalle allant de 1:1 à 1:0.

7. Procédé selon une ou plusieurs des revendications 1 à 6, caractérisé en ce que le composant A) et/ou le composant B) ainsi que les liants diluables à l'eau avec des acides par protonisation contiennent des doubles liaisons oléfiniques réactives les unes avec les autres.

8. Procédé selon l'une ou plusieurs des revendications 1 à 7, caractérisé en ce qu'à 100 parties en masse du liant diluable à l'eau par protonisation avec des acides correspondent 10 à 80 parties en masse des composants A) et B).

9. Procédé selon l'une ou plusieurs des revendications 1 à 8, caractérisé en ce que la teneur en solvants organiques à haut point d'ébullition insolubles dans l'eau, par rapport à la masse totale du revêtement, se situe en dessous de 1% en masse.